# EUROPÄISCHE PATENTSCHRIFT

(11) **EP 2 644 862 B1**
(45) Veröffentlichungstag und Bekanntmachung des Hinweises auf die Patenterteilung: **26.09.2018**
(21) Anmeldenummer: 13160417.5
(22) Anmeldetag: 21.03.2013
(51) Int. Cl.: F02B 25/16, F02B 25/20, F02B 33/30

(54) **Brennkraftmaschine, insbesondere 2-Takt-Brennkraftmaschine**
Internal combustion engine, in particular a 2-stroke internal combustion engine
Moteur à combustion interne, notamment moteur à combustion interne à 2 temps

(30) Priorität: 29.03.2012 DE 202012101134 U
(43) Veröffentlichungstag der Anmeldung: 02.10.2013
(73) Patentinhaber: Makita Corporation, Anjo, Aichi 446-8502 (JP)
(72) Erfinder: Radel, Harry, 21502 Geesthact (DE); Schönfeld, Michael, 23821 Rohlstorf (DE); Luegger, Johannes, 22041 Hamburg (DE)
(74) Vertreter: RGTH

(56) Entgegenhaltungen:
- DE-A1- 2 741 649
- DE-A1- 3 146 439
- DE-A1- 3 837 502
- DE-U1-202012 101 133
- JP-A- S59 136 518
- US-A1- 2004 255 883
- US-A1- 2005 139 179

## Beschreibung

Die vorliegende Erfindung betrifft eine Brennkraftmaschine mit einem Kurbelgehäuse und mit einem Zylinder, wobei im Zylinder ein Kolben hubbeweglich geführt ist und einen Brennraum beweglich begrenzt, und wobei im Zylinder wenigstens ein Überströmkanal angeordnet ist, durch den Zündgemisch vom Kurbelgehäuse in den Brennraum hindurch geführt wird, wobei der Kolben eine Kolbenunterkante aufweist, die mit wenigstens einem Gegenkörper derart zusammenwirkt, dass durch die Hubbewegung des Kolbens mit der Kolbenunterkante ein Eintrittsquerschnitt des Überströmkanals zum Eintritt des Zündgemisches vom Kurbelgehäuse in den Überströmkanal steuerbar ist. Die Erfindung richtet sich ferner auf ein Motorarbeitsgerät mit einer solchen Brennkraftmaschine sowie einem Verfahren zum Betrieb einer derartigen Brennkraftmaschine.

### Stand der Technik

Die DE 102 10 892 A1 beschreibt eine Brennkraftmaschine mit einem Kurbelgehäuse und mit einem Zylinder, in dem ein Kolben hubbeweglich geführt ist und einen im Zylinder ausgebildeten Brennraum beweglich begrenzt. Der Brennraum wird mit Zündgemisch über Überströmkanäle versorgt, und die Überströmkanäle münden über ein offenes kurbelgehäuseseitiges Ende in den durch das Kurbelgehäuse umschlossenen Raum, wodurch ein Eintrittsquerschnitt des Überströmkanals gebildet ist. Zum Öffnen und zum Schließen der Überströmkanäle dient eine Kolbenoberkante, die einen Austrittsquerschnitt der Überströmkanäle nach Art eines Schieberventils öffnet und schließt. Die Öffnung des Austrittsquerschnitts der Überströmkanäle erfolgt während der Abwärtsbewegung des Kolbens, sodass Zündgemisch in den Brennraum gelangen kann. Erst mit der Aufwärtsbewegung des Kolbens erfolgt wieder ein Schließen des Austrittsquerschnittes, und durch die Aufwärtsbewegung in Richtung zum oberen Totpunkt wird das Zündgemisch nachfolgend verdichtet. Die Überströmkanäle sind gemäß der gezeigten Bauart der Brennkraftmaschine als geschlossen ausgeführte Überströmkanäle im Körper des Zylinders eingebracht.

Aus der DE 197 07 767 B4 ist eine weitere Bauart einer Brennkraftmaschine mit einem Kurbelgehäuse und mit einem Zylinder bekannt, und im Zylinder ist ein Kolben hubbeweglich geführt, um einen Brennraum beweglich zu begrenzen. In der Zylinderwand sind Überströmkanäle angeordnet, die in Richtung zur Kolbenlauffläche offen ausgeführt sind. Die Überströmkanäle gehen frei in den durch das Kurbelgehäuse umschlossenen Raum über, und das Öffnen und Schließen eines Austrittsquerschnittes der Überströmkanäle in den Brennraum erfolgt ebenfalls über eine Kolbenoberkante.

Die US 2004/255883 A1, die DE 38 37 502 A1 und DE 31 46 439 A1 beschreiben eine Brennkraftmaschine, bei welcher zum Öffnen und Schließen der Überströmkanäle ein Teil des Kolbens mit der Zylinderwand, in welcher die Überströmkanäle ausgebildet sind, zusammenwirkt.

Grundsätzlich wird beim Bau von Brennkraftmaschinen, insbesondere von 2-Takt-Brennkraftmaschinen, das Ziel verfolgt, geringe Abgaswerte zu erzielen. Zusätzlich zu Maßnahmen, die zur Verbesserung der Abgasqualität führen, beispielsweise durch Filter und/oder Katalysatoren, ist bekannt, dass die Ausgestaltung der Überströmkanäle hinsichtlich ihrer Position und/oder ihrer geometrischen Ausformung einen positiven Einfluss auf die Abgasqualität der Brennkraftmaschine haben kann. Auch kann neben der Verbesserung der Abgasqualität der Kraftstoffverbrauch der Brennkraftmaschine durch eine Optimierung der Überströmkanäle erreicht werden. Beispielsweise kann vermieden werden, dass unverbranntes Zündgemisch aus den Überströmkanälen unmittelbar in den Auslass gelangt und folglich unverbrannt in die Abgasanlage entweicht.

### Darstellung der Erfindung: Aufgabe, Lösung, Vorteile

Damit ergibt sich die Aufgabe der Erfindung, eine Brennkraftmaschine mit Maßnahmen auszuführen, die zu einer weiteren Verbesserung der Abgasqualität und/oder des Kraftstoffverbrauchs führen, insbesondere ist es die Aufgabe, eine verbesserte Zumessung von Zündgemisch in den Brennraum zu schaffen.

Diese Aufgabe wird ausgehend von einer Brennkraftmaschine gemäß dem Oberbegriff des Anspruchs 1, einem Motorarbeitsgerät gemäß dem Oberbegriff des Anspruches 8 sowie einem Verfahren gemäß Anspruch 9 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass ein mit einer Kolbenunterkante (15) zusammenwirkende Bereich des Kurbelgehäuses (10) einen Vorsprung (22) aufweist, wobei der Vorsprung (22) mit einer Innenseite (20) der Kolbenunterkante (15) zur Steuerung und insbesondere zur Reduzierung oder Schließung eines Eintrittsquerschnittes (16) eines Überströmkanals (14) zusammenwirkt, wenn sich der Kolben (12) im Bereich des unteren Totpunktes befindet.

Durch entsprechende geometrische Anpassungen des Kolbens und des Eintrittsquerschnitts des Überströmkanals hat sich überraschend gezeigt, dass eine Steuerung des Eintrittsquerschnittes des Überströmkanals zum Eintritt des Zündgemisches vom Kurbelgehäuse in den Überströmkanal zu einer Verbesserung der Abgasqualität der Brennkraftmaschine führt. Hierbei wird insbesondere die Größe des Eintrittsquerschnittes gesteuert bzw. verändert. Das erfindungsgemäße Prinzip der Steuerung des Eintrittsquerschnittes fußt dabei insbesondere auf einer konventionellen Bauart der Brennkraftmaschine, die vorzugsweise ohne das Prinzip einer Luftvorlage ausgeführt ist.

Die Ausführungsbeispiele der Ausbildung des Gegenkörpers als einen Bereich des Kurbelgehäuses bilden einen ruhenden Bestandteil der Brennkraftmaschine, wobei auch ein bewegbares Steuerelement nach Art eines Schiebers vorgesehen sein kann, der nicht Grundbestandteil der Brennkraftmaschine ist. Dieser kann manuell, mit der Fliehkraft wenigstens eines rotierenden Bauteils der Brennraftmaschine, elektromechanisch, pneumatisch, hydraulisch oder piezoelektrisch bewegbar sein. Der Gegenkörper kann ferner durch einen sonstigen Körper insbesondere mit einer Kante gebildet sein, der im Bereich des unteren Endes des Überströmkanals anordbar ist.

Durch die Steuerung des Eintrittsquerschnittes des Überströmkanals vom Kurbelgehäuse in den Überströmkanal wird die Zumessung des Zündgemisches vom Kurbelgehäuse in den Brennraum beeinflusst. Der Einfluss auf die Kraftstoffzufuhr über das Kurbelgehäuse kann durch die Steuerung überraschenderweise so ausgelegt werden, dass sich eine verbesserte Abgasqualität und unter bestimmten Voraussetzungen auch eine Verringerung des Kraftstoffverbrauchs ergibt. Unter dem Begriff der Kolbenunterkante kann vorliegend jeder Bereich oder Teilbereich des Kolbens verstanden werden, der nicht durch die den Brennraum begrenzende Kolbenoberseite oder durch die zumindest obere Seitenfläche des Kolbens gebildet ist, vorzugsweise beschreibt die Kolbenunterkante im vorliegenden Zusammenhang die Unterseite des Kolbenhemdes, sodass die Kolbenunterkante durch den etwa kreisförmig umlaufenden Abschlussbereich des Kolbenhemdes gebildet ist.

Die erfindungsgemäße Brennkraftmaschine weist einen Austrittsquerschnitt des Überströmkanals in den Brennraum auf, der auf bekannte Weise mit einer Kolbenoberkante steuerbar ist, wobei durch die Hubbewegung des Kolbens der Eintrittsquerschnitt mit der Kolbenunterkante verkleinert wird, wenn der Austrittsquerschnitt vergrößert wird und/oder wobei der Eintrittsquerschnitt vergrößert wird, wenn der Austrittsquerschnitt verkleinert wird. Insbesondere kann der Austrittsquerschnitt durch die Kolbenoberkante geöffnet sein, während der Eintrittsquerschnitt durch die Kolbenunterkante verkleinert, auf einen definierten, verkleinerten Spalt reduziert oder sogar geschlossen ist. Ist der Austrittsquerschnitt mit der Kolbenoberkante verschlossen, so ist der Eintrittsquerschnitt durch die Kolbenunterkante wieder weit geöffnet. Damit wird eine Art Wechselventilsteuerung gebildet, und mit jedem Kolbenhub wird der Überströmkanal mit einer diskreten Menge des Zündgemisches gefüllt, und die diskrete Menge des Zündgemisches aus dem Überströmkanal gelangt in den Brennraum, wenn der Austrittsquerschnitt des Überströmkanals in den Brennraum durch die Kolbenoberkante freigegeben wird, ohne dass eine direkte fluidische Verbindung zwischen dem Kurbelgehäuse und dem Brennraum vorliegt, wenn sich der Kolben im unteren Totpunkt befindet. Ferner weist der Kolben ein Kolbenhemd mit einer Innenseite und mit einer Außenseite auf, wobei die Kolbenunterkante dabei durch den unteren Bereich des Kolbenhemdes gebildet wird und der mit der Kolbenunterkante zusammenwirkende Bereich des Kurbelgehäuses einen Vorsprung aufweist. Der Vorsprung kann beispielsweise mit der Innenseite der Kolbenunterkante zur Steuerung und insbesondere zur Schließung des Eintrittsquerschnittes des Überströmkanals zusammenwirken, wenn sich der Kolben im Bereich des unteren Totpunktes befindet.

Die Verbesserung der Laufeigenschaften der Brennkraftmaschine mit der erfindungsgemäßen Steuerung des Eintrittsquerschnittes des oder der Überströmkanäle kann auf den folgenden Zusammenhang zurückgeführt werden: Bewegt sich der Kolben in Richtung zum unteren Totpunkt und gibt der Kolben so den Auslassquerschnitt des Überströmkanals in den Brennraum frei, herrscht im Brennraum ein höherer Druck als im Überströmkanal. Die sich im Überströmkanal befindliche Gemischmenge wird so in das Kurbelgehäuse zurückgedrückt. Dabei kann auch verbranntes Gemisch, also Abgas, vom Brennraum über den oder die Überströmkanäle in das Kurbelgehäuse gelangen, welches zunächst das Gemisch zurückgedrückt hat. Ab einem gewissen Zeitpunkt, nämlich wenn ein Druckgleichgewicht zwischen dem Brennraum und dem Kurbelgehäuse vorherrscht und anschließend der Druck im Kurbelgehäuse größer wird als der stetig abnehmende Druck im Brennraum, kehrt die Strömungsbewegung im Überströmkanal in Richtung zum Brennraum um. Das teilweise Schließen des Überströmkanals am Eintrittsquerschnitt kann dabei dafür sorgen, dass in der Umkehrphase geordnete Strömungsverhältnisse vorherrschen, die eine klare Trennung von Abgas im Überströmkanal und Zündgemisch im Kurbelgehäuse bewirken. Dabei hat sich als vorteilhaft herausgestellt, den Eintrittsquerschnitt des Überströmkanals nicht vollständig zu schließen sondern nur auf einen Spalt zu verkleinern, insbesondere wenn die Brennkraftmaschine im oder nahe des Leerlaufes betrieben wird.

Mit besonderem Vorteil kann durch das Zusammenwirken der Kolbenunterkante mit dem wenigstens einen Bereich des Kurbelgehäuses eine Reduzierung des Eintrittsquerschnittes des Überströmkanals im unteren Totpunkt oder vorzugsweise über einen Bereich des unteren Totpunktes des Kolbens erfolgen. Der Eintrittsquerschnitt und/oder die Kolbenunterkante können eine geometrische Ausgestaltung aufweisen, die eine Reduzierung oder ein vollständiges Schließen des Eintrittsquerschnittes zwischen dem Kurbelgehäuse und dem Überströmkanal bewirkt. Befindet sich beispielsweise der Kolben im Bereich des unteren Totpunktes, so kann die Kolbenoberkante den Austrittsquerschnitt zwischen dem Überströmkanal und dem Brennraum öffnen, während der Eintrittsquerschnitt des Überströmkanals zum Kurbelgehäuse auf einen verkleinerten Spalt reduziert ist. Folglich gelangt die in den Überströmkanal über dem Kurbelhub aus dem Kurbelgehäuse eingetretene Menge an Zündgemisch in den Brennraum, und es wird vermieden, dass beispielsweise durch einen erhöhten Druck im Kurbelgehäuse eine größere Menge an Zündgemisch in den Brennraum gelangt, ohne dass diese zur Verbrennung notwendig wäre. Insbesondere der Effekt der diskreten Zumessung einer Menge an Zündgemisch über das mit Überdruck gefüllte Volumen des zumindest einen Überströmkanals führt zu einer verbesserten Abgasqualität und insbesondere zu einem verringerten Verbrauch an Kraftstoff beim Betrieb der Brennkraftmaschine. Insbesondere können mehrere Überströmkanäle mit jeweiligen Eintrittsquerschnitten und Austrittsquerschnitten zwischen dem Kurbelgehäuse und dem Brennraum vorgesehen sein, wobei vorzugsweise jeder Überströmkanal mit unterschiedlich langen Öffnungs- und Schließzeiten der Eintrittsquerschnitte und/oder der Austrittsquerschnitte gesteuert werden kann.

Eine besondere Verbesserung des Betriebes der Brennkraftmaschine wird insbesondere dann erreicht, wenn zwischen der Kolbenunterkante und dem Gegenkörper ein Restspalt verbleibt. Die Größe des Restspaltes kann für übliche Baugrößen von Brennkraftmaschinen für handhaltbare Motorarbeitsgeräte beispielsweise 1mm bis 3mm betragen, wenn beispielsweise das Hubvolumen ca. 30ccm bis ca. 80ccm beträgt. Mit Bezug auf den Durchmesser des Kolbens und auf das Hubvolumen der Brennkraftmaschine kann beispielhaft angegeben werden, dass bei einem Kolbendurchmesser von 38mm und einem Hubvolumen von 35ccm ein Restspalt von 1,2mm, bei einem Kolbendurchmesser von 45mm und einem Hubvolumen von 50ccm ein Restspalt von 1,5mm und bei einem Kolbendurchmesser von 52mm und einem Hubvolumen von 81ccm ein Restspalt von 2mm mit besonders vorteilhaften Ergebnissen erzielbar sind.

Steht der Kolben im unteren Totpunkt, so kann das Verhältnis des freien Austrittsquerschnitts des Überströmkanals, also des Endes, das in Richtung Brennraum zeigt, zum freibleibenden Spalt zwischen Kolbenunterkante und Gegenkörper etwa 1,9 bis 2,2 betragen. Das heißt, der Austrittsquerschnitt des Überströmkanals kann etwa doppelt so groß wie der freibleibende Spalt an der Kolbenunterkante sein. Wird das Verhältnis größer und damit der Spalt kleiner, so geht Leistung der Brennkraftmaschine verloren, aber das Leerlaufverhalten kann sich bessern. Damit steigen die spezifischen Emissionen, wenn diese auf die jeweilige abgegebene Leistung bezogen werden. Wird das Verhältnis kleiner und damit der Spalt größer, so steigen die Emissionen und somit auch die spezifischen Emissionen. Insbesondere kann das Verhältnis des verbleibenden Spaltes im Eintrittsquerschnitt zum Kolbendurchmesser 1:60 bis 1:10 und bevorzugt 1:40 bis 1:20 betragen.

Gemäß einem bevorzugten Ausführungsbeispiel der Brennkraftmaschine kann der mit der Kolbenunterkante zusammenwirkende Bereich des Kurbelgehäuses auch einen Absatz aufweisen, wobei der Absatz mit der Außenseite der Kolbenunterkante zur Steuerung und insbesondere zur Reduzierung des Eintrittsquerschnittes des Überströmkanals zusammenwirkt, wenn sich der Kolben im Bereich des unteren Totpunktes befindet. Selbstverständlich kann die Wirkverbindung zwischen der Kolbenunterkante und dem Kurbelgehäuse auch so ausgeführt sein, dass eine gleichzeitige Steuerwirkung beziehungsweise Schließwirkung sowohl der Innenseite als auch der Außenseite der Kolbenunterkante mit dem Vorsprung beziehungsweise mit dem Absatz erzielt wird.

Der Zylinder der erfindungsgemäßen Brennkraftmaschine kann als Druckgusszylinder mit wenigstens einem kolbenseitig offen ausgeführten Überströmkanal ausgebildet sein. Eine Schließung des Überströmkanals erfolgt durch die Mantelfläche des Kolbens, wie einleitend in der DE 197 07 767 B4 beschrieben. Auch besteht die Möglichkeit, dass der Zylinder der erfindungsgemäßen Brennkraftmaschine als Schwerkraftgusszylinder mit wenigstens einem im Körper des Zylinders eingebrachten und somit geschlossen ausgeführten Überströmkanal ausgebildet ist, wie einleitend in der DE 102 10 892 A1 beschrieben. Sowohl für die Bauart des Zylinders als Druckgusszylinder als auch für die Bauart des Zylinders als Schwerkraftgusszylinder kann eine erfindungsgemäße Steuerung des Eintrittsquerschnittes des Überströmkanals zwischen dem Kurbelgehäuse und dem Überströmkanal ermöglicht werden. Ebenfalls können für die erfindungsgemäße Brennkraftmaschine Zylinder zum Einsatz kommen, die eingesetzte Laufbuchsen umfassen, sodass sich dadurch ein geschlossener Überströmkanal bildet. Ferner können zusätzliche Deckel im Bereich der Überströmöffnung zum Zylinder vorgesehen sein, um eine bessere Kontur des oder der Überströmkanäle zu erhalten.

Mit weiterem Vorteil kann wenigstens der mit der Kolbenunterkante zusammenwirkende Bereich des Kurbelgehäuses eine Mulde aufweisen, durch die der Eintrittsquerschnitt des Überströmkanals vergrößert wird, wenn der Kolben in Richtung zum oberen Totpunkt bewegt wird. Die genannten geometrischen Maßnahmen des Kurbelgehäuses, beispielsweise der Vorsprung zur Wirkverbindung mit der Innenseite der Kolbenunterkante, der Absatz zur Wirkverbindung mit der Außenseite der Kolbenunterkante und/oder die Mulde zur Vergrößerung des Eintrittsquerschnittes können in den Bereichen des Kurbelgehäuses vorgesehen sein, in denen die Eintrittsquerschnitte der Überströmkanäle vorhanden sind. Somit müssen die genannten Maßnahmen nicht vollumfänglich in dem Bereich des Kurbelgehäuses eingebracht sein, der mit der Kolbenunterkante zusammenwirken kann.

Mit besonderem Vorteil kann der wenigstens eine Überströmkanal oder mehrere Überströmkanäle ein Volumen aufweisen, das derart bestimmt ist, dass das aus dem Überströmkanal oder aus den Überströmkanälen austretende Zündgemisch eine Masse aufweist, die der Masse einer Brennraumfüllung eines Ladungswechsels mit Zündgemisch entspricht. Die Masse des Zündgemisches kann mit der erfindungsgemäßen Zuteilung des Zündgemisches vom Kurbelgehäuse in den Brennraum dadurch gesteuert werden, dass der Vordruck des Zündgemisches im Kurbelgehäuse verändert wird. Ein hoher Vordruck des Zündgemisches im Kurbelgehäuse bewirkt eine größere Füllmenge des Zündgemisches in den Überströmkanälen, bis der Eintrittsquerschnitt durch die Kolbenunterkante verringert und insbesondere geschlossen wird. Somit kann trotz der erfindungsgemäßen Zuteilung des Zündgemisches vom Kurbelgehäuse in den Brennraum die Steuerung der in den Brennraum einzubringenden Menge an Zündgemisch auf gleiche Weise gesteuert werden, indem der Druck des Zündgemisches im Kurbelgehäuse angepasst wird.

Die Brennkraftmaschine kann als 2- Takt- Brennkraftmaschine insbesondere für ein handbetriebenes Motorarbeitsgerät wie ein Garten- und Grünanlagenpflegegerät oder für ein Kleinkraftrad, einen Bootsmotor und dergleichen ausgeführt sein, die vorzugsweise ohne Spülvorlage ausgebildet ist. Die Spülvorlage beruht darauf, dem Gemisch aus dem Kurbelgehäuse entweder im Überströmkanal Frischluft oder Altgas vorzulagern oder mittels eines Frischluftvorhangs den Auslass während des gesamten Ladungswechsels abzuschirmen. Die vorliegende Erfindung ist jedoch vorzugsweise für spülvorlagefreie Brennkraftmaschinen einsetzbar.

Die Erfindung richtet sich ferner auf ein Motorarbeitsgerät mit einer vorstehend beschriebenen und die aufgeführten Merkmale und/oder Vorteile aufweisenden Brennkraftmaschine.

Weiterhin betrifft die Erfindung ein Verfahren zum Betrieb einer Brennkraftmaschine mit einem Kurbelgehäuse und mit einem Zylinder, wobei im Zylinder ein Kolben eine Hubbewegung ausführt und damit einen Brennraum beweglich begrenzt, und wobei im Zylinder wenigstens ein Überströmkanal angeordnet ist, durch den Zündgemisch vom Kurbelgehäuse in den Brennraum hindurch geführt wird, und ist vorgesehen, dass der Kolben mit einer Kolbenunterkante ausgeführt wird, die mit wenigstens einem Gegenkörper zusammenwirkt, sodass durch die Hubbewegung des Kolbens mit der Kolbenunterkante ein Eintrittsquerschnitt des Überströmkanals zum Eintritt des Zündgemisches vom Kurbelgehäuse in den Überströmkanal gesteuert wird. Die Merkmale und Vorteile, die vorstehend für die Brennkraftmaschine beschrieben wurden, können zur Ausführung des Verfahrens ebenfalls Anwendung finden.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 eine Querschnittsansicht durch eine Brennkraftmaschine mit einem Kolben und einer Kolbenunterkante, die in Wirkverbindung mit einem Kurbelgehäuse als Gegenkörper den Eintrittsquerschnitt eines Überströmkanals steuert,
Figur 2 eine Detailansicht eines Kolbens in einem Zylinder, welcher Zylinder als Schwerkraftgusszylinder ausgeführt ist, wobei sich der Kolben im Bereich des unteren Totpunktes befindet,
Figur 3 das Ausführungsbeispiel gemäß Figur 2, wobei sich der Kolben im Bereich zwischen dem unteren Totpunkt und dem oberen Totpunkt befindet,
Figur 4 eine Detailansicht eines nicht erfindungsgemäßen Kolbens in einem Zylinder, welcher Zylinder als Druckgusszylinder ausgeführt ist, wobei sich der Kolben im Bereich des unteren Totpunktes befindet,
Figur 5 das nicht erfindungsgemäße Ausführungsbeispiel gemäß Figur 4, wobei sich der Kolben im Bereich zwischen dem unteren Totpunkt und dem oberen Totpunkt befindet,
Figur 6 eine Detailansicht eines weiteren, nicht erfindungsgemäßen Ausführungsbeispiels des Gegenkörpers, der durch einen Teil einer Zylinderfußdichtung gebildet ist,
Figur 7a eine Detailansicht eines weiteren, nicht erfindungsgemäßen Ausführungsbeispiels des Gegenkörpers, der durch ein bewegbares Steuerelement gebildet ist, welches sich in einer vorgeschobenen Stellung befindet,
Figur 7b die Detailansicht des nicht erfindungsgemäßen bewegbaren Steuerelementes gemäß Figur 7a, welches sich in einer zurückgezogenen Stellung befindet und
Figur 8 ein weiteres, nicht erfindungsgemäßes Ausführungsbeispiel eines Gegenkörpers, der zur Bildung eines Spaltes im Eintrittsquerschnitt durch ein Kurbelwellenlager gebildet ist.

### Bevorzugte Ausführungsformen der Erfindung

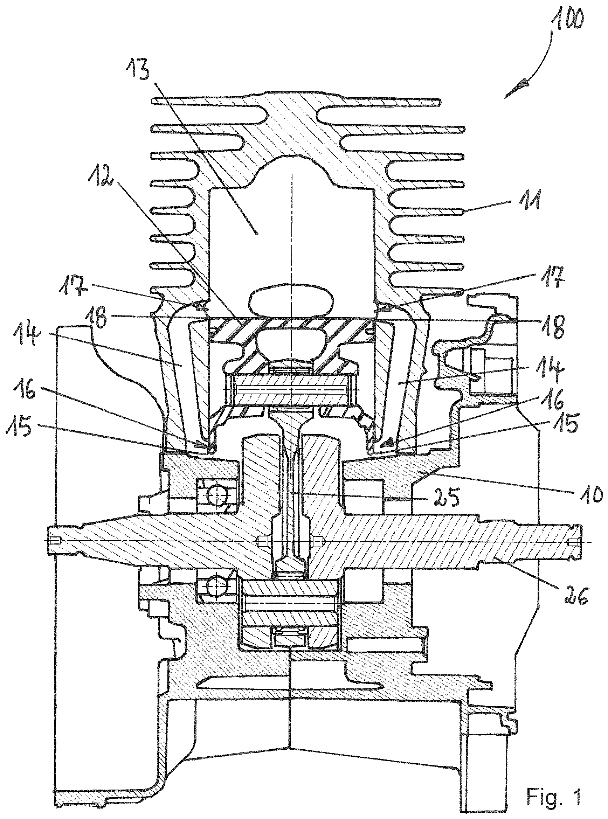

Figur 1 zeigt in einer Querschnittsansicht eine Brennkraftmaschine 100 mit einem Kurbelgehäuse 10 und mit einem Zylinder 11, wobei im Zylinder 11 ein Kolben 12 hubbeweglich geführt ist, und somit einen im Zylinder 11 ausgebildeten Brennraum 13 beweglich begrenzt. Der gezeigte Kolben 12 befindet sich im unteren Totpunkt und ist über eine Pleuel 25 mit einer Kurbelwelle 26 verbunden. Führt der Kolben 12 eine Hubbewegung aus, so wird die Hubbewegung des Kolbens 12 über die Pleuel 25 in eine Drehbewegung der Kurbelwelle 26 überführt. Die Kurbelwelle 26 ist in einem Kurbelgehäuse 10 drehbar gelagert aufgenommen, und der Zylinder 11 ist oberseitig am Kurbelgehäuse 10 angeordnet.

Die Brennkraftmaschine 100 ist als 2-Takt-Brennkraftmaschine ausgeführt, und Zündgemisch gelangt vom Kurbelgehäuse 10 über zwei dargestellte Überströmkanäle 14 in den Brennraum 13. Der gezeigte Zylinder 11 ist beispielhaft als Schwerkraftgusszylinder ausgeführt, und die Überströmkanäle 14 sind geschlossen im Körper des Zylinders 11 eingebracht.

Im Übergang zwischen dem Innenraum des Kurbelgehäuses 10 und den Überströmkanälen 14 ist ein jeweiliger Eintrittsquerschnitt 16 gezeigt, und über die Eintrittsquerschnitte 16 kann Zündgemisch aus dem Innenraum des Kurbelgehäuses 10 in die Überströmkanäle 14 gelangen. Das Zündgemisch kann durch Austrittsquerschnitte 17 aus den Überströmkanälen 14 in den Brennraum 13 überführt werden.

Der Kolben 12 ist in der Position seines unteren Totpunktes gezeigt, und erfindungsgemäß steuert eine Kolbenunterkante 15 den Eintrittsquerschnitt 16 zwischen dem Kurbelgehäuse 10 und den Überströmkanälen 14. Das Ausführungsbeispiel zeigt eine Reduzierung der Eintrittsquerschnitte 16 im gezeigten unteren Totpunkt des Kolbens 12. Zugleich gibt eine Kolbenoberkante 18 Austrittsquerschnitte 17 zwischen den Überströmkanälen 14 und dem Brennraum 13 im Zylinder 11 im Wesentlichen vollständig frei.

Bewegt sich durch eine weitere Drehung der Kurbelwelle 26 der Kolben 12 in Richtung zum oberen Totpunkt, so gibt die Kolbenunterkante 15 die Eintrittsquerschnitte 16 der Überströmkanäle 14 wieder vollständig frei, während die Kolbenoberkante 18 die Austrittsquerschnitte 17 zwischen den Überströmkanälen 14 und dem Brennraum 13 verschließt. Folglich zeigt das Ausführungsbeispiel eine Steuerung der Eintrittsquerschnitte 16 der Überströmkanäle 14 zwischen dem Kurbelgehäuse 10 und dem Volumen der Überströmkanäle 14. Die Steuerung der Eintrittsquerschnitte 16 erfolgt in Wirkverbindung der Kolbenunterkante 15 mit einem Gegenkörper 10, der durch einen Bereich des Kurbelgehäuses 10 gebildet ist und der in den folgenden Figuren mit weiteren Merkmalen näher dargestellt ist.

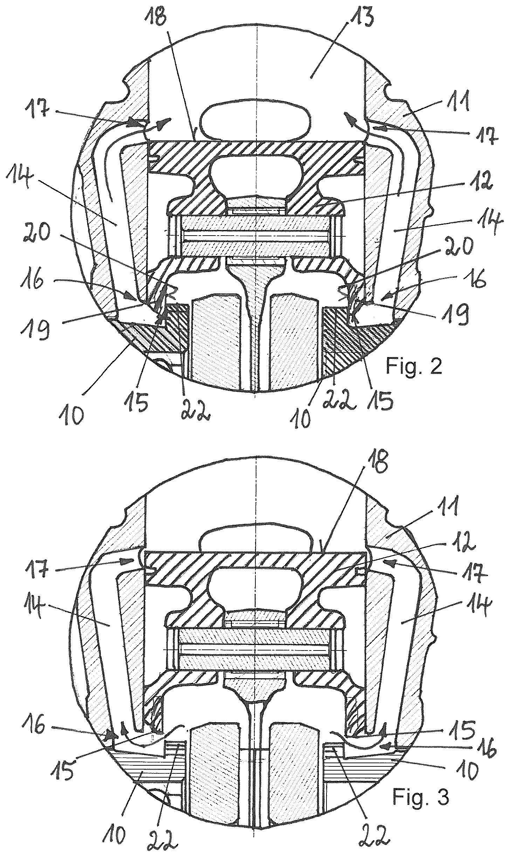

Figur 2 zeigt eine Detailansicht des Kolbens 12 im unteren Totpunkt im Zylinder 11 der Brennkraftmaschine 100. Der Kolben 12 weist eine Kolbenunterkante 15 auf, und die Kolbenunterkante 15 besitzt wenigstens abschnittsweise im Bereich von zwei gezeigten Überströmkanälen 14 jeweilige Innenseiten 20. Das Kurbelgehäuse 10 weist an mit den Überströmkanälen 14 korrespondierender Stelle Vorsprünge 22 auf, und in der gezeigten Position des unteren Totpunktes des Kolbens 12 wirken die Innenseiten 20 der Kolbenunterkante 15 mit den Vorsprüngen 22 derart zusammen, dass die Eintrittsquerschnitte 16 der Überströmkanäle 14 zum Kurbelgehäuse 10 stark verkleinert sind. In der gezeigten Position kann nur eine sehr geringe Menge an Zündgemisch oder sogar kein Zündgemisch vom Kurbelgehäuse 10 über die Eintrittsquerschnitte 16 in die Überströmkanäle 14 gelangen.

Die Überströmkanäle 14 weisen Austrittsquerschnitte 17 in einer Hubhöhe auf, in der diese durch die gezeigte Kolbenoberkante 18 geöffnet sind, da sich der Kolben 12 in der gezeigten Position des unteren Totpunktes befindet. Bewegt sich der Kolben 12 wieder in Richtung zum oberen Totpunkt, so öffnet die Kolbenunterkante 15, die den Fortsatz am Kolbenhemd 19 bildet, die Eintrittsquerschnitte 16 wieder vollständig, während die Austrittsquerschnitte 17 wieder geschlossen werden.

Figur 3 zeigt die Detailansicht der Brennkraftmaschine 100 gemäß Figur 2, wobei der Kolben 12 die Position des unteren Totpunktes verlassen hat, sodass die Eintrittsquerschnitte 16 der Überströmkanäle 14 wieder geöffnet sind, da sich die Kolbenunterkante 15 außer Eingriff mit den Vorsprüngen 22 des Kurbelgehäuses 10 befindet. Zugleich ist erkennbar, dass die Kolbenoberkante 18 die Austrittsquerschnitte 17 verschließt, und während die Austrittsquerschnitte 17 verschlossen bleiben, und wenn der Kolben 12 den oberen Totpunkt durchläuft, können die Überströmkanäle 14 mit Zündgemisch aus dem Kurbelgehäuse 10 gefüllt werden, wie durch die Fluidpfeile in den Eintrittsquerschnitten 16 angedeutet ist.

Der Zylinder 11 gemäß dem Ausführungsbeispiel in den Figuren 2 und 3 ist als Schwerkraftgusszylinder ausgeführt und weist im Körper des Zylinders 11 innenseitig eingebrachte, geschlossene Überströmkanäle 14 auf.

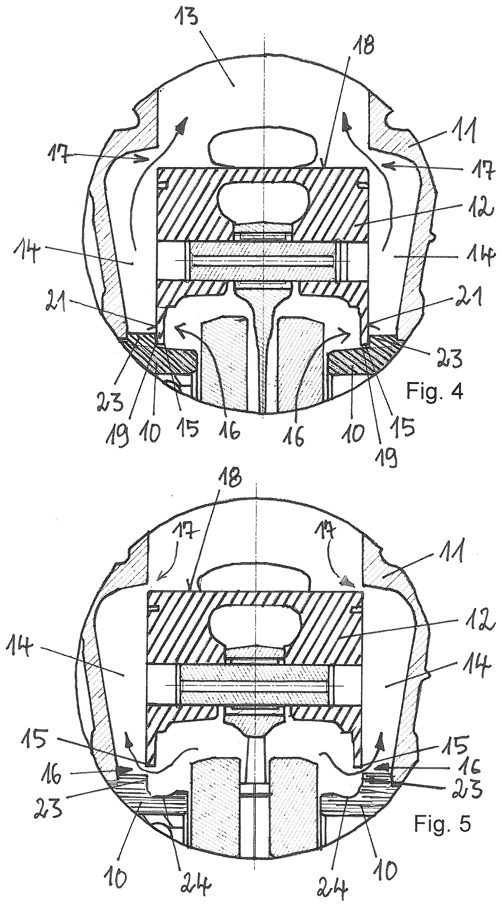

Die Figuren 4 und 5 zeigen ein nicht erfindungsgemäßes Ausführungsbeispiel einer Brennkraftmaschine mit einem Zylinder 11, in dem der Kolben 12 in verschiedenen Hubpositionen gezeigt ist. Der Zylinder 11 ist beispielhaft als Druckgusszylinder ausgeführt und weist Überströmkanäle 14 auf, die kolbenseitig offen ausgeführt sind.

Figur 4 zeigt den Kolben 12 in der Position des unteren Totpunktes im Zylinder 11, und die Kolbenunterkante 15 wirkt derart mit dem Kurbelgehäuse 10 zusammen, dass die Eintrittsquerschnitte 16 beispielhaft verschlossen sind, diese können aber auch nur auf einen kleinen Spalt reduziert sein. Die Wirkverbindung zum Schließen der Eintrittsquerschnitte 16 zwischen der Kolbenunterkante und dem Kurbelgehäuse 10 erfolgt über die Außenseite 21 des Kolbenhemdes 19, und die Außenseite 21 wirkt mit einem Absatz 23 an korrespondierender Stelle im Kurbelgehäuse 10 zusammen. In der gezeigten Position des unteren Totpunktes öffnet die Kolbenoberkante 18 zugleich die Austrittsquerschnitte 17 der Überströmkanäle 14, sodass Zündgemisch von den Überströmkanälen 14 in den Brennraum 13 gelangen kann, wie mit den Fluidpfeilen angedeutet ist.

Figur 5 zeigt schließlich das nicht erfindungsgemäße Ausführungsbeispiel gemäß Figur 4, wobei der Kolben 12 die Position des unteren Totpunktes verlassen hat und in Richtung zum oberen Totpunkt im Zylinder 11 bewegt wird. Dadurch gelangt die Kolbenunterkante 15 außer Eingriff mit dem Absatz 23, und die Eintrittsquerschnitte 16 werden geöffnet, während die Austrittsquerschnitte 17 der Überströmkanäle 14 durch die Kolbenoberkante 18 geschlossen werden.

Im Kurbelgehäuse 10 sind beispielhaft Mulden 24 an der Position der Eintrittsquerschnitte 16 der Überströmkanäle 14 gezeigt, wodurch eine Strömung des Zündgemisches vom Kurbelgehäuse 10 in die Überströmkanäle 14 begünstigt wird, wenn der Kolben 12 den Bereich des unteren Totpunktes verlassen hat.

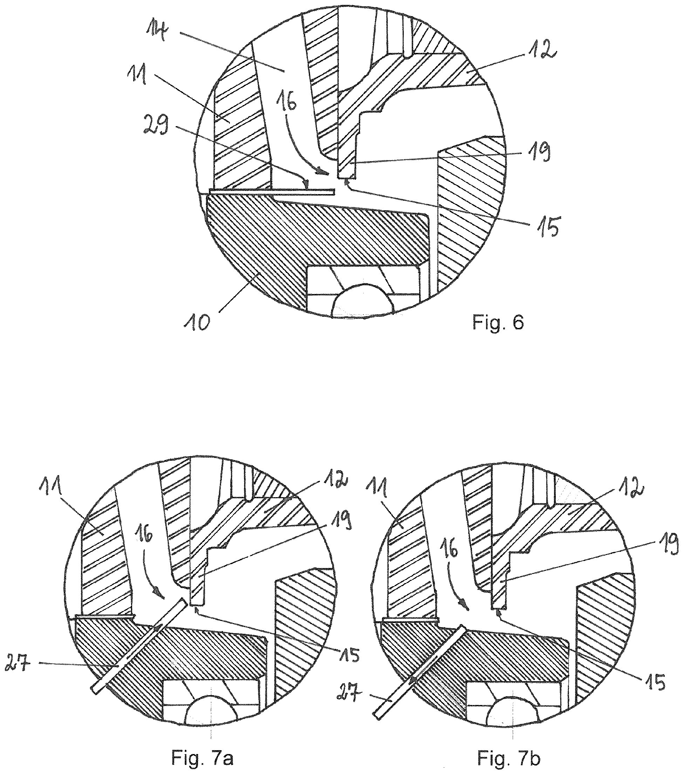

Figur 6 zeigt ein weiteres, nicht erfindungsgemäßes Ausführungsbeispiel zur Steuerung des Eintrittsquerschnittes 16 des Überströmkanals 14 im Zylinder 11 der Brennkraftmaschine. Zwischen dem Zylinder 11 und dem Kurbelgehäuse 10 ist eine Zylinderfußdichtung 29 angeordnet, und die Zylinderfußdichtung 29 weist einen Teilbereich auf, der sich in den Eintrittsquerschnitt 16 des Überströmkanals 14 teilweise hinein erstreckt. In Abhängigkeit der Hubposition des Kolbens 12 kann die an der unteren Seite des Kolbenhemdes 19 sich befindende Kolbenunterkante 15 mit der Zylinderfußdichtung 29 querschnittsverengend zusammenwirken, wodurch der Eintrittsquerschnitt 16 des Überströmkanals 14 gesteuert werden kann. Insbesondere kann der Eintrittsquerschnitt 16 zwischen der Kolbenunterkante 15 und der Zylinderfußdichtung 29 im unteren Totpunkt des Kolbens 12 auf einen Spalt reduziert werden, der so klein ist, dass der gewünschte Effekt der Verbesserung der Laufeigenschaften der Brennkraftmaschine erreicht wird.

Die Figuren 7a und 7b zeigen ein weiteres, nicht erfindungsgemäßes Ausführungsbeispiel eines Gegenkörpers 27, das als bewegliches Steuerelement 27 ausgeführt ist und mit der Kolbenunterkante 15 am Kolbenhemd 19 des Kolbens 12 zur Steuerung des Eintrittsquerschnittes 16 des Überströmkanals 14 im Zylinder 11 zusammenwirken kann. Das Steuerelement 27 ist in gezeigter Pfeilrichtung beweglich, und in Figur 7a ist das Steuerelement 27 in den Eintrittsquerschnitt 16 des Überströmkanals 14 eingeschoben gezeigt, wohingegen das Steuerelement 27 in Figur 7b aus dem Eintrittsquerschnitt 16 des Überströmkanals 14 zurückgezogen gezeigt ist.

Das bewegbare Steuerelement 27 kann manuell, mit der Fliehkraft wenigstens eines rotierenden Bauteils der Brennraftmaschine, elektromechanisch, pneumatisch, hydraulisch oder piezoelektrisch oder in anderer Weise bewegbar sein. Das Ausführungsbeispiel zeigt das Steuerelement 27 in einer im Kurbelgehäuse 10 aufgenommenen Anordnung, wobei das Steuerelement 27 beispielsweise auf gleiche Weise im Zylinder 11 selbst aufgenommen sein kann.

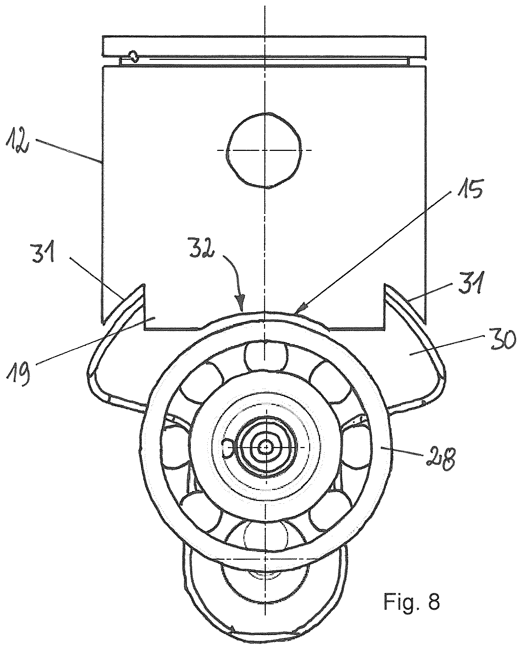

Figur 8 zeigt schließlich eine Ansicht eines nicht erfindungsgemäßen Kolbens 12 mit einem Kolbenhemd 19, an dem eine Kolbenunterkante 15 ausgebildet ist. Der Kolben 12 ist in einer Position im unteren Totpunkt gezeigt, wobei die Kolbenunterkante 15 mit einem Kurbelwellenlager 28 einen Spalt bildet, der wie vorstehend bereits beschrieben eine Reduzierung des Eintrittsquerschnittes 16 eines nicht gezeigten Überströmkanals in einem ebenfalls nicht gezeigten Zylinder bilden kann. Damit der Spalt zwischen der Kolbenunterkante 15 und dem Kurbelwellenlager 28 im unteren Totpunkt auf ein Maß von beispielsweise 1mm bis 3mm reduziert werden kann, weist der Kolben Aussparungen 31 auf, die das Kurbelwellengegengewicht 30 mit Rotation der Kurbelwelle kollisionsfrei durchlaufen kann. Da das Kurbelwellenlager 28 eine runde Außenkontur aufweist, ist das Kolbenhemd 19 in dem Bereich, in welchem die Kolbenunterkante 15 mit dem Kurbelwellenlager 28 den Spalt bildet, der runden Außenkontur des Kurbelwellenlagers 28 angepasst und bildet somit eine nach innen gerichtete runde Einschnürung 32. Die gezeigte Variante zur Bildung eines Spaltes im Eintrittsquerschnitt 16 ist dann vorteilhaft umsetzbar, wenn ein Zylinder verwendet wird, bei dem ein Teil des Kurbelgehäuses am Zylinder ausgebildet, insbesondere angegossen ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein. Die gezeigten Formen des Zylinders 11 als Schwerkraftgusszylinder gemäß der Darstellung in Figur 2 und 3 oder als Druckgusszylinder gemäß der Darstellung in den Figuren 4 und 5 sind lediglich beispielhaft vorgesehen, und die jeweils gezeigten Merkmale können für beide Zylinderbauformen Verwendung finden. Beispielsweise kann der Eintrittsquerschnitt 16 der Überströmkanäle 14 bei einer Brennkraftmaschine 100 mit einem Schwerkraftgusszylinder auch gesteuert, insbesondere verschlossen werden, indem die Außenseite 21 des Kolbenhemdes 19 mit einem Absatz 23 des Kurbelgehäuses 10 zusammenwirkt. Hingegen kann auch bei einer Brennkraftmaschine 100 mit einem Zylinder 11, der als Druckgusszylinder ausgeführt ist, ein Verschließen der Eintrittsquerschnitte 16 der Überströmkanäle 14 erreicht werden, indem die Innenseite 20 des Kolbenhemdes 19 mit einem Vorsprung 22 am Kurbelgehäuse 10 zusammenwirkt. Insbesondere kann auch eine Mulde 24 gemäß dem Ausführungsbeispiel in Figur 5 Anwendung finden, wenn die Brennkraftmaschine 10 mit einem Zylinder 11 nach Art eines Schwerkraftgusszylinders ausgeführt ist.

### Bezugszeichenliste

- 100: Brennkraftmaschine
- 10: Kurbelgehäuse
- 11: Zylinder
- 12: Kolben
- 13: Brennraum
- 14: Überströmkanal
- 15: Kolbenunterkante
- 16: Eintrittsquerschnitt
- 17: Austrittsquerschnitt
- 18: Kolbenoberkante
- 19: Kolbenhemd
- 20: Innenseite
- 21: Außenseite
- 22: Vorsprung
- 23: Absatz
- 24: Mulde
- 25: Pleuel
- 26: Kurbelwelle
- 27: Steuerelement
- 28: Kurbelwellenlager
- 29: Zylinderfußdichtung
- 30: Kurbelwellengegengewicht
- 31: Aussparung
- 32: Einschnürung

## Patentansprüche

1. Brennkraftmaschine (100) mit einem Kurbelgehäuse (10) und mit einem Zylinder (11), wobei im Zylinder (11) ein Kolben (12) hubbeweglich geführt ist und einen Brennraum (13) beweglich begrenzt, und wobei im Zylinder (11) wenigstens ein Überströmkanal (14) angeordnet ist, durch den Zündgemisch vom Kurbelgehäuse (10) in den Brennraum (13) hindurch geführt wird, wobei der Kolben (12) eine Kolbenunterkante (15) aufweist, die mit wenigstens einem Gegenkörper (10) derart zusammenwirkt, dass durch die Hubbewegung des Kolbens (12) mit der Kolbenunterkante (15) ein Eintrittsquerschnitt (16) des Überströmkanals (14) zum Eintritt des Zündgemisches vom Kurbelgehäuse (10) in den Überströmkanal (14) steuerbar ist, wobei der Gegenkörper (10) durch einen Bereich des Kurbelgehäuses (10) gebildet ist, wobei der wenigstens eine Überströmkanal (14) einen in den Brennraum (13) mündenden Austrittsquerschnitt (17) aufweist und der mit einer Kolbenoberkante (18) steuerbar ist, wobei durch die Hubbewegung des Kolbens (12) der Eintrittsquerschnitt (16) verkleinert wird, wenn der Austrittsquerschnitt (17) vergrößert wird und/oder wobei der Eintrittsquerschnitt (16) vergrößert wird, wenn der Austrittsquerschnitt (17) verkleinert wird, wobei durch das Zusammenwirken der Kolbenunterkante (15) mit dem wenigstens einen Gegenkörper (10) eine Reduzierung oder ein Schließen des Eintrittsquerschnittes (16) des Überströmkanals (14) im unteren Totpunkt oder vorzugsweise über einen Bereich des unteren Totpunktes des Kolbens (12) bewirkt, und wobei der Kolben (12) ein Kolbenhemd (19) mit einer Innenseite (20) und mit einer Außenseite (21) aufweist, wobei die Kolbenunterkante (15) den unteren Bereich des Kolbenhemdes (19) bildet, **dadurch gekennzeichnet, dass** der mit der Kolbenunterkante (15) zusammenwirkende Bereich des Kurbelgehäuses (10) einen Vorsprung (22) aufweist, wobei der Vorsprung (22) mit der Innenseite (20) der Kolbenunterkante (15) zur Steuerung und insbesondere zur Reduzierung oder Schließung des Eintrittsquerschnittes (16) des Überströmkanals (14) zusammenwirkt, wenn sich der Kolben (12) im Bereich des unteren Totpunktes befindet.

2. Brennkraftmaschine nach Ansprüche 1, **dadurch gekennzeichnet, dass** der mit der Kolbenunterkante (15) zusammenwirkende Bereich des Kurbelgehäuses (10) einen Absatz (23) aufweist, wobei der Absatz (23) mit der Außenseite (21) der Kolbenunterkante (15) zur Steuerung und insbesondere zur Reduzierung oder Schließung des Eintrittsquerschnittes (16) des Überströmkanals (14) zusammenwirkt, wenn sich der Kolben (12) im Bereich des unteren Totpunktes befindet.

3. Brennkraftmaschine nach einem der vorgenannten Ansprüche, **dadurch gekennzeichnet, dass** der Zylinder (11) der Brennkraftmaschine als Druckgusszylinder mit wenigstens einem kolbenseitig offen ausgeführten Überströmkanal (14) ausgebildet ist oder dass der Zylinder (11) der Brennkraftmaschine als Schwerkraftgusszylinder mit wenigstens einem im Körper des Zylinders (11) eingebrachten und geschlossen ausgeführten Überströmkanal (14) ausgebildet ist.

4. Brennkraftmaschine nach einem der vorgenannten Ansprüche, **dadurch gekennzeichnet, dass** wenigstens der mit der Kolbenunterkante (15) zusammenwirkende Bereich des Kurbelgehäuses (10) eine Mulde (24) aufweist, durch die der Eintrittsquerschnitt (16) des Überströmkanals (14) vergrößert wird, wenn der Kolben (12) in Richtung zum oberen Totpunkt bewegt ist.

5. Brennkraftmaschine nach einem der vorgenannten Ansprüche, **dadurch gekennzeichnet, dass** der wenigstens eine Überströmkanal (14) oder mehrere Überströmkanäle (14) ein Volumen aufweist bzw. aufweisen, das derart bestimmt ist, dass das aus dem Überströmkanal (14) oder aus den Überströmkanälen (14) austretende Zündgemisch eine Masse aufweist, die der Masse einer Brennraumfüllung eines Ladungswechsels mit Zündgemisch entspricht.

6. Brennkraftmaschine nach einem der vorgenannten Ansprüche, **dadurch gekennzeichnet, dass** das Verhältnis des freien Austrittsquerschnitts (17) des Überströmkanals (14) in den Brennraum zum freibleibenden Spalt zwischen Kolbenunterkante (15) und Gegenkörper (10) im unteren Totpunkt des Kolbens (12) 1,9 bis 2,2 beträgt und/oder dass das Verhältnis des verbleibenden Spaltes im Eintrittsquerschnitt (16) zum Kolbendurchmesser 1:60 bis 1:10 und bevorzugt 1:40 bis 1:20 beträgt.

7. Brennkraftmaschine nach einem der vorgenannten Ansprüche ausgebildet als 2-Takt-Brennkraftmaschine insbesondere für ein handbetriebenes Motorarbeitsgerät wie ein Garten- und Grünanlagenpflegegerät oder für ein Kleinkraftrad, einen Bootsmotor und dergleichen, die vorzugsweise als spülvorlagefreie Brennkraftmaschine ausgebildet ist.

8. Motorarbeitsgerät mit einer Brennkraftmaschine nach einem der Ansprüche 1 bis 7.

9. Verfahren zum Betrieb einer Brennkraftmaschine (100) mit einem Kurbelgehäuse (10) und mit einem Zylinder (11), wobei im Zylinder (11) ein Kolben (12) eine Hubbewegung ausführt und damit einen Brennraum (13) beweglich begrenzt, und wobei im Zylinder (11) wenigstens ein Überströmkanal (14) angeordnet ist, durch den Zündgemisch vom Kurbelgehäuse (10) in den Brennraum (13) hindurch geführt wird, wobei der Kolben (12) mit einer Kolbenunterkante (15) ausgeführt wird, die mit wenigstens einem durch einen Bereich des Kurbelgehäuses (10) gebildeten Gegenkörper (10) zusammenwirkt, sodass durch die Hubbewegung des Kolbens (12) mit der Kolbenunterkante (15) ein Eintrittsquerschnitt (16) des Überströmkanals (14) zum Eintritt des Zündgemisches vom Kurbelgehäuse (10) in den Überströmkanal (14) gesteuert wird, wobei der wenigstens eine Überströmkanal (14) einen in den Brennraum (13) mündenden Austrittsquerschnitt (17) aufweist und der mit einer Kolbenoberkante (18) steuerbar ist, wobei durch die Hubbewegung des Kolbens (12) der Eintrittsquerschnitt (16) verkleinert wird, wenn der Austrittsquerschnitt (17) vergrößert wird und/oder wobei der Eintrittsquerschnitt (16) vergrößert wird, wenn der Austrittsquerschnitt (17) verkleinert wird und durch das Zusammenwirken der Kolbenunterkante (15) mit dem wenigstens einen Gegenkörper (10) eine Reduzierung oder ein Schließen des Eintrittsquerschnittes (16) des Überströmkanals (14) im unteren Totpunkt oder vorzugsweise über einen Bereich des unteren Totpunktes des Kolbens (12) bewirkt, insbesondere zum Betrieb einer Brennkraftmaschine (100) nach einem der Ansprüche 1 bis 7.

## Claims

1. An internal combustion engine (100) with a crankcase (10) and a cylinder (11), wherein in the cylinder (11) a piston (12) is guided in a stroke movement and in its movement bounds a combustion chamber (13), and wherein at least one transfer port (14) is arranged in the cylinder (11), through which an ignition mixture is led from the crankcase (10) into the combustion chamber (13), wherein the piston (12) has a piston lower edge (15), which interacts with at least one counter body (10) in such a way that by means of the stroke movement of the piston (12) an entry cross-section (16) of the transfer port (14) can be controlled with the piston lower edge (15) for purposes of entry of the ignition mixture from the crankcase (10) into the transfer port (14), wherein the counter body (10) is formed by a region of the crankcase (10), wherein the at least one transfer port (14) has an exit cross section (17) opening into the combustion chamber (13), and the exit cross section (17) can be controlled with a piston upper edge (18), wherein by the stroke movement of the piston (12) the entry cross-section (16) is reduced when the exit cross-section (17) is increased, and/or wherein the entry cross-section (16) is increased when the exit cross-section (17) is reduced, wherein by the interaction of the piston lower edge (15) with the at least one counter body (10) a reduction or closure of the entry cross section (16) of the transfer port (14) is effected at bottom dead centre, or preferably over a region in the vicinity of bottom dead centre of the piston (12), and wherein the piston (12) has a piston skirt (19) with an inner face (20) and an outer face (21), wherein the piston lower edge (15) forms the lower region of the piston skirt (19), **characterised in that** the region of the crankcase (10) interacting with the piston lower edge (15) has a projection (22), wherein the projection (22) interacts with the inner face (20) of the piston lower edge (15) for purposes of controlling, and in particular for purposes of reducing or closing the entry cross-section (16) of the transfer port (14) when the piston (12) is in the region of bottom dead centre.

2. The internal combustion engine in accordance with claim 1, **characterised in that** the region of the crankcase (10) interacting with the piston lower edge (15) has a shoulder (23), wherein the shoulder (23) interacts with the outer face (21) of the piston lower edge (15) for purposes of controlling, and in particular for purposes of reducing or closing, the entry cross section (16) of the transfer port (14) when the piston (12) is in the region of bottom dead centre.

3. The internal combustion engine in accordance with one of the above-cited claims, **characterised in that** the cylinder (11) of the internal combustion engine is designed as a pressure die-cast cylinder with at least one transfer port (14) open on the piston side, or **in that** the cylinder (11) of the internal combustion engine is designed as a gravity-cast cylinder with at least one closed transfer port (14) introduced into the body of the cylinder (11).

4. The internal combustion engine in accordance with one of the above-cited claims, **characterised in that** at least the region of the crankcase (10) interacting with the piston lower edge (15) has a depression (24), by means of which the entry cross-section (16) of the transfer port (14) is enlarged when the piston (12) is moved in the direction of top dead centre.

5. The internal combustion engine in accordance with one of the above-cited claims, **characterised in that** the at least one transfer port (14), or the plurality of transfer ports (14), has a volume that is determined such that the ignition mixture emerging from the transfer port (14) or ports (14) has a mass that corresponds to the mass of a charge cycle filling a combustion chamber with ignition mixture.

6. The internal combustion engine in accordance with one of the above-cited claims, **characterised in that** the ratio of the free exit cross section (17) of the transfer port (14) into the combustion chamber to the gap remaining free between the piston lower edge (15) and the counter body (10) at bottom dead centre of the piston (12) is 1.9 to 2.2, and/or the ratio of the gap remaining in the entry cross section (16) to the piston diameter is 1:60 to 1:10, and preferably 1:40 to 1:20.

7. The internal combustion engine in accordance with one of the above-cited claims, designed as a 2-stroke internal combustion engine, in particular for a hand-operated motorised tool, such as a garden and parks maintenance device, or for a moped, a boat engine, and similar, which is preferably designed as an internal combustion engine without stratified scavenging.

8. A motorised tool with an internal combustion engine in accordance with one of the claims 1 to 7.

9. A method for the operation of an internal combustion engine (100) with a crankcase (10) and a cylinder (11), wherein in the cylinder (11) a piston (12) executes a stroke movement and thus in its movement bounds a combustion chamber (13), and wherein at least one transfer port (14) is arranged in the cylinder (11), through which an ignition mixture is led from the crankcase (10) into the combustion chamber (13), wherein the piston (12) is embodied with a piston lower edge (15), which interacts with at least one counter body (10) formed by a region of the crankcase (10) in such a way that by means of the stroke movement of the piston (12) an entry cross-section (16) of the transfer port (14) can be controlled with the piston lower edge (15) for purposes of entry of the ignition mixture from the crankcase (10) into the transfer port (14), wherein the at least one transfer port (14) has an exit cross section (17) opening into the combustion chamber (13), and which can be controlled with a piston upper edge (18), wherein by the stroke movement of the piston (12) the entry cross-section (16) is reduced when the exit cross-section (17) is increased, and/or wherein the entry cross section (16) is increased when the exit cross section (17) is reduced, and by the interaction of the lower piston edge (15) with the at least one counter body (10) effects a reduction or closure of the entry cross section (16) of the transfer port (14) at bottom dead centre, or preferably over a region in the region of the bottom dead centre, of the piston (12), in particular for the operation of an internal combustion engine (100) in accordance with one of the claims 1 to 7.

## Revendications

1. Moteur à combustion interne (100) comprenant un carter de moteur (10) et un cylindre (11), un piston (12) étant placé de manière mobile en course dans le cylindre (11) et limitant de manière mobile une chambre de combustion (13) et dans le cylindre (11) étant placé au moins un canal de trop plein (14), à travers lequel du mélange d'allumage est conduit du carter de moteur (10) dans la chambre de combustion (13), le piston (12) comportant une arête inférieure de piston (15) qui coopère avec au moins un corps antagoniste (10), de telle sorte que par le déplacement en course du piston (12), par l'arête inférieure de piston (15), une section transversale d'entrée (16) du canal de trop plein (14) puisse être commandée pour l'entrée du mélange d'allumage du carter de moteur (10) dans le canal de trop plein (14), le corps antagoniste (10) étant formé par une zone du carter de moteur (10), l'au moins un canal de trop plein (14) comportant une section transversale de sortie (17) qui débouche dans la chambre de combustion (13) et qui peut être commandée par une arête supérieure de piston (18), du fait du déplacement en course du piston (12), la section transversale d'entrée (16) se rétrécissant lorsque la section transversale de sortie (17) s'agrandit et/ou la section transversale d'entrée (16) s'agrandissant lorsque la section transversale de sortie (17) se rétrécit, la coopération de l'arête inférieure de piston (15) avec l'au moins un corps antagoniste (10) provoquant une réduction ou une fermeture de la section transversale d'entrée (16) du canal de trop plein (14) au point mort inférieur ou de préférence sur une plage du point mort inférieur du piston (12), et le piston (12) comportant une chemise de piston (19) dotée d'une face intérieure (20) et d'une face extérieure (21), l'arête inférieure de piston (15) formant la zone inférieure de la chemise de piston (19), **caractérisé en ce que** la zone du carter de moteur (10) qui coopère avec l'arête inférieure de piston (15) comporte une saillie (22), la saillie (22) coopérant avec la face intérieure (20) de l'arête inférieure de piston (15) pour commander et notamment pour réduire ou fermer la section transversale d'entrée (16) du canal de trop plein (14) lorsque le piston (12) se trouve dans la plage du point mort inférieur.

2. Moteur à combustion interne selon la revendication 1, **caractérisé en ce que** la zone du carter de moteur (10) qui coopère avec l'arête inférieure de piston (15) comporte un talon (23), le talon (23) coopérant avec la face extérieure (21) de l'arête inférieure de piston (15) pour commander et notamment pour réduire ou fermer la section transversale d'entrée (16) du canal de trop plein (14) lorsque le piston (12) se trouve dans la plage du point mort inférieur.

3. Moteur à combustion interne selon l'une quelconque des revendications précédentes, **caractérisé en ce que** le cylindre (11) du moteur à combustion interne est réalisé sous la forme d'un cylindre en fonte avec au moins un canal de trop-plein (14) réalisé en étant ouvert sur le côté du piston ou **en ce que** le cylindre (11) du moteur à combustion interne est réalisé sous la forme d'un cylindre gravitationnel en fonte avec au moins un canal de trop plein (14) introduit dans le corps du cylindre (11).

4. Moteur à combustion interne selon l'une quelconque des revendications précédentes, **caractérisé en ce qu'**au moins la zone du carter de moteur (10) qui coopère avec l'arête inférieure de piston (15) comporte un creux (24) par lequel la section transversale d'entrée (16) du canal de trop plein (14) est agrandie lorsque le piston (12) se déplace dans la direction du point mort supérieur.

5. Moteur à combustion interne selon l'une quelconque des revendications précédentes, **caractérisé en ce que** l'au moins un canal de trop plein (14) ou plusieurs canaux de trop-plein (14) présente ou présentent un volume qui est déterminé de telle sorte que le mélange d'allumage qui s'échappe du canal de trop plein (14) ou des canaux de trop plein (14) présente une masse qui correspond à la masse d'une charge de chambre d'allumage d'un cycle de charge avec mélange d'allumage.

6. Moteur à combustion interne selon l'une quelconque des revendications précédentes, **caractérisé en ce que** le rapport de la section transversale de sortie (17) libre du canal de trop plein (14) dans la chambre de combustion à la fente restant libre entre l'arête inférieure de piston (15) et le corps antagoniste (10) au point mort inférieur du piston (12) est de 1,9 à 2,2 et/ou **en ce que** le rapport de la fente restant libre dans la section transversale d'entrée (16) au diamètre du piston est 1:60 à 1:10 et de préférence de 1:40 à 1:20.

7. Moteur à combustion interne selon l'une quelconque des revendications précédentes, réalisé sous la forme d'un moteur à combustion interne à 2 temps, notamment destiné à un outil de travail motorisé à actionnement manuel, à un outil de jardinage ou d'entretien des espaces verts ou à un cyclomoteur, à un moteur de bateau ou similaire, qui est réalisé sous la forme d'un moteur à combustion interne sans pot catalytique.

8. Outil de travail motorisé à actionnement manuel, doté d'un moteur à combustion interne selon l'une quelconque des revendications 1 à 7.

9. Procédé, destiné à faire fonctionner un moteur à combustion interne (100), comprenant un carter de moteur (10) et un cylindre (11), dans le cylindre (11), un piston (12) effectuant une course et limitant ainsi de manière mobile une chambre de combustion (13) et dans le cylindre (11) étant placé au moins un canal de trop plein (14) à travers lequel le mélange d'allumage est conduit du carter de moteur (10) dans la chambre de combustion (13), le piston (12) étant réalisé avec une arête inférieure de piston (15) qui coopère avec au moins un corps antagoniste (10) formé par une zone du carter de moteur (10), de sorte que par le déplacement en course du piston (12), par l'arête inférieure de piston (15), une section transversale d'entrée (16) du canal de trop plein (14) pour l'entrée du mélange d'allumage du carter de moteur (10) dans le canal de trop plein (14) soit commandée, l'au moins un canal de trop plein (14) comportant une section transversale de sortie (17) qui débouche dans la chambre de combustion (13) et qui peut être commandée par une arête supérieure de piston (18), par le déplacement en course du piston (12), la section transversale d'entrée (16) se rétrécissant lorsque la section transversale de sortie (17) s'agrandit et/ou la section transversale d'entrée (16) s'agrandissant lorsque la section transversale de sortie (17) se rétrécit et par la coopération de l'arête inférieure de piston (15) avec l'au moins un corps antagoniste (10) étant provoquée un réduction ou une fermeture de la section transversale d'entrée (16) du canal de trop plein (14) au point mort inférieur ou de préférence sur une plage inférieure du point mort inférieur des piston (12), notamment pour faire fonctionner un moteur à combustion interne (100) selon l'une quelconque des revendications 1 à 7.
